# EUROPÄISCHE PATENTSCHRIFT

(11) **EP 1 484 243 B1**
(45) Veröffentlichungstag und Bekanntmachung des Hinweises auf die Patenterteilung: **28.05.2008**
(21) Anmeldenummer: 04005930.5
(22) Anmeldetag: 12.03.2004
(51) Int. Cl.: B63G 8/08, B63H 23/24, B63H 21/17

(54) **Unterseeboot**
Submarine
Sous-marin

(30) Priorität: 05.06.2003 DE 10325456
(43) Veröffentlichungstag der Anmeldung: 08.12.2004
(73) Patentinhaber: Howaldtswerke-Deutsche Werft GmbH, 24143 Kiel (DE)
(72) Erfinder: Iwers, Uwe-Jens, Dipl.-Ing., 23568 Lübeck (DE); Buder, Ingo, Dipl.-Ing., 23617 Stockelsdorf (DE)
(74) Vertreter: Vollmann, Heiko

(56) Entgegenhaltungen:
- EP-A1- 0 536 876
- EP-A2- 0 052 265
- WO-A-02/058206
- DE-A1- 10 011 591
- DE-U1- 29 724 214

## Beschreibung

Die Erfindung betrifft ein Unterseeboot, insbesondere die elektrische Versorgung eines solchen Bootes.

Es zählt zum Stand der Technik, U-Boote mit einem Gleichstromversorgungsnetz auszustatten. Versorgt wird dieses Netz von wiederaufladbaren Batterien (Akkumulatoren), beispielsweise in Form von Blei-Akkumulatoren. Eingebunden in dieses Versorgungsnetz ist ein Dieselgenerator zum Laden der Batterien sowie auch zur Stromerzeugung bei Überwasserfahrt oder bei Fahrt auf Sehrohrtiefe. Es zählt ebenfalls zum Stand der Technik, neben den Akkumulatoren eine Brennstoffzellenanlage vorzusehen. Verbrauchsseitig sind bei einem solchen Gleichstromnetz Bordnetzumformer vorgesehen, welche den Gleichstrom in Wechselstrom und auf ein übliches Spannungsniveau umsetzen. Ein weiterer wesentlicher Verbraucher ist der den Propeller des Bootes antreibende Elektromotor, der ebenfalls von diesem elektrischen Versorgungsnetz gespeist wird. Zur Speisung des Netzes ist ein Dieselgeneratorensatz sowie eine Brennstoffzellenanlage vorgesehen.

Um auch bei Ausfall von Einzelaggregaten den Betrieb des Versorgungsnetzes aufrechterhalten zu können, sind einige Aggregate mehrfach vorhanden. Das Gleichstromversorgungsnetz, das im Wesentlichen aus zwei Sammelschienen besteht, an denen sämtliche Verbraucher, Speicher und Wandler angeschlossen sind, weist eine in zwei Teilschienen auftrennbare Sammelschiene auf. Damit beispielsweise im Falle eines Kurzschlusses oder einer sonstigen Störung der störungsbehaftete Teil abgetrennt werden kann, ist ein die Teilschienen verbindender Schalter vorgesehen, der im Normalbetrieb geschlossen ist. Im Störfall wird dieser geöffnet, damit die Stromversorgung zumindest über einen Schienenteil sichergestellt werden kann. Zu diesem Zweck sind mindestens zwei Batterien vorgesehen, wobei diese so angeschlossen sind, dass jeder Teilschiene eine Batterie zugeordnet ist. Um sicherzustellen, dass auch bei Ausfall eines Teilnetzes der Antrieb des Schiffes gewährleistet ist, ist der Motor elektrisch in Teilmotore aufgeteilt und jeder dieser Teilmotore an einen Teil der Sammelschiene angeschlossen, so dass nach Auftrennen der Sammelschiene im Störfall zumindest ein Teilmotor noch mit elektrischer Energie versorgt ist. Sowohl der Dieselgeneratorensatz als auch die Brennstoffzellenanlage sind jedoch nur einfach vorhanden und an einer der beiden Teilschienen angeschlossen.

Nachteilig bei einer solchen Versorgung ist, dass im statistischen Mittel bei jeder zweiten Abschaltung die Brennstoffzellenanlage und der Dieselgeneratorensatz abgeschaltet werden, obwohl sie voll funktionsfähig sind. Im Kurzschlussfall wird das Gesamtnetz bis zum Öffnen des die Sammelschienen verbindenden Schalters durch den damit einhergehenden Spannungseinbruch beeinträchtigt, was insbesondere bei elektronischen Systemen zu Funktionsstörungen führen kann. Alle Bordnetzverbraucher an der nun spannungslosen Teilanlage bleiben bis zur Umschaltung auf den intakten Netzabschnitt ohne Spannungsversorgung. Die Auslöse- und Umschaltvorgänge dauern länger, als dies der zulässigen Spannungsunterbrechung statischer Umformer entspricht. Daher schalten sich diese Umformer dann ab und müssen nach Wiederkehr des Spannungsniveaus dann erst wieder neu formieren, bevor die Bordnetzversorgung weiter erfolgt. Weiterhin ist es nachteilig, dass der die Teilanlage miteinander verbindende Kuppelschalter für sehr hohe Kurzschlussströme ausgelegt sein muss, da er ungünstigenfalls erst während des Kurzschlusses lichtbogenfrei geöffnet werden muss. Derartige Kuppelschalter sind nur begrenzt verfügbar, d. h. der maximal zulässige Kurzschlussstrom wird durch den Kuppelschalter begrenzt, was letztlich zu einer Leistungsbegrenzung der gesamten elektrischen Anlage führt.

Vor diesem Hintergrund liegt der Erfindung die Aufgabe zugrunde, ein Unterseeboot dahingehend zu verbessern, dass die vorgenannten Nachteile vermindert bzw. vermieden werden und dass insbesondere die elektrische Versorgung und Versorgungssicherheit verbessert werden.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung und den Zeichnungen angegeben.

Grundgedanke der vorliegenden Erfindung ist es, mindestens zwei voneinander getrennte elektrische Versorgungsnetze vorzusehen, die im normalen Betrieb elektrisch nicht miteinander verbunden, sondern von einander getrennt sind und nur bedarfsweise, d. h. im Störfall miteinander verbunden werden können. Dabei ist jedem Versorgungsnetz mindestens ein elektrochemischer Energiespeicher und mindestens ein Teil eines Antriebsmotors für einen Propeller sowie mindestens ein Bordnetzumformer zugeordnet, so dass auf diese Weise auch bei Ausfall eines Versorgungsnetzes sowohl das Bordnetz weiter versorgt ist als auch der Propeller angetrieben bleibt. Alternativ kann statt der Zuordnung eines Bordnetzumformers für jedes Versorgungsnetz auch mindestens ein gemeinsamer Bordnetzumformer vorgesehen sein, welcher aus beiden Versorgungsnetzen gespeist wird, der jedoch über in eine Richtung sperrende elektronische Bauelemente, vorzugsweise Dioden derart eingegliedert ist, dass ein Stromfluss zwischen den Versorgungsnetzen verhindert ist. Es kann also im Störfall eines der Versorgungsnetze nach Auftreten eines Kurzschlusses oder eines unzulässig hohen Fehlstromes abgeschaltet werden, ohne dass die elektrische Grundversorgung des Bootes beeinträchtigt wird. Da mindestens ein Bordnetzumformer versorgt ist, ist auch die Bordnetzversorgung unmittelbar während und nach dem Störfall sichergestellt. Wenn dann nach Lokalisierung des Fehlers dieser beseitigt oder der entsprechende Netzabschnitt abgeschaltet wird, kann dann entweder dieses Versorgungsnetz wieder hochgefahren werden oder gegebenenfalls auch durch Verbinden mit dem anderen Versorgungsnetz von letzterem mitversorgt werden.

Zweckmäßigerweise sind die Versorgungsnetze als Gleichspannungsnetze ausgelegt und jeweils mindestens zwei Sammelschienen zugeordnet, an denen positives bzw. negatives Potential des jeweiligen Versorgungsnetzes anliegt. Solche Gleichspannungsnetze können abhängig von der Betriebssituation durch Dieselgeneratoren, aus Brennstoffzellenanlagen oder aufladbaren Batterien, insbesondere Blei-Akkumulatorenbatterien versorgt werden.

Beim Einsatz von Gleichspannungsnetzen ist es besonders zweckmäßig, auch als Elektromotor einen Gleichstrommotor, vorzugsweise einen permanentmagneterregten Gleichstrommotor einzusetzen. Alternativ kann auch ein anderer Motor mit vorgeschaltetem Umformer eingesetzt werden, zum Beispiel ein wechselrichtergespeister Wechselstrommotor. Um sicherzustellen, dass der Motor, wenn eines der Versorgungsnetze ausfällt, noch versorgt ist, ist dieser in mindestens zwei von einander unabhängige elektrische Teilmotore aufgeteilt, wobei jeder Teilmotor einem anderen Versorgungsnetz zugeordnet ist. Wenn mehr als zwei Versorgungsnetze vorgesehen sind, ist es zweckmäßig, auch entsprechend mehr Teilmotore vorzusehen, da dann bei Ausfall eines Versorgungsnetzes auch nur ein vergleichsweise kleinerer Motorteil ausfällt.

Zweckmäßigerweise ist nicht nur jedem Versorgungsnetz ein eigener Energiespeicher in Form einer wiederaufladbaren Batterie, sondern auch ein Dieselgenerator zugeordnet, der den Energiespeicher laden oder das Versorgungsnetz direkt mit elektrischer Energie versorgen kann.

Um auch bei Ausfall eines der Versorgungsnetze sicherzustellen, dass die Bordnetzversorgung vollständig bestehen bleibt, ist in vorteilhafter Weiterbildung der Erfindung vorgesehen, die Bordnetzumformer über in eine Richtung sperrende elektronische Bauelemente, vorzugsweise Dioden, mit beiden Versorgungsnetzen elektrisch zu verbinden. Über die Dioden wird sichergestellt, dass die Bordnetzumformer zwar von beiden Versorgungsnetzen stromversorgt werden, dass jedoch ein Stromfluss zwischen den Netzen nicht stattfindet. Wenn dann ein Versorgungsnetz ausfällt, wird der Bordnetzumformer des ausgefallenen Versorgungsnetzes selbsttätig von dem anderen Versorgungsnetz mitversorgt, die Bordnetzversorgung also kontinuierlich aufrechterhalten.

Wenn zur Energieversorgung eine Brennstoffzellenanlage vorgesehen ist, wird diese vorteilhaft in gleicher Weise über in eine Richtung sperrende elektronische Bauelemente, vorzugsweise Dioden, an beide Versorgungsnetze angeschlossen, so dass die Brennstoffzellenanlage in beide Versorgungsnetze einspeisen kann, umgekehrt jedoch verhindert wird, dass ein Strom zwischen den Versorgungsnetzen fließt.

Wenn die Brennstoffzellenanlage aus zwei oder mehr Teilanlagen besteht oder zwei oder mehr Brennstoffzellenanlagen vorgesehen sind, dann ist es zweckmäßig, jedem Versorgungsnetz eine Brennstoffzellenanlage zuzuordnen. In diesem Falle können die vorgenannten Dioden entfallen, was hinsichtlich der durch die Dioden bedingten Verlustleistung von Vorteil ist. Allerdings ist die Einbindung in beide Versorgungsnetze mittels Dioden sowohl versorgungstechnisch als auch hinsichtlich der gleichmäßigen Belastung der Versorgungsnetze von Vorteil. So, wie durch Anschluss der Bordnetzumformer an beide Netze dafür Sorge getragen wird, dass zunächst das stärkere, das die höhere Spannung aufweisende Versorgungsnetz belastet wird, wird umgekehrt durch Anschluss der Brennstoffzellenanlage über Dioden an beide Versorgungsnetze gewährleistet, dass zunächst einmal das schwächere Versorgungsnetz, also das mit der geringeren Spannung, versorgt wird, d. h. dessen Batterien geladen werden. Diese Einbindung von Verbraucher bzw. Quelle gleicht somit die systembedingten nicht zu vermeidenden Belastungsunterschiede der beiden Versorgungsnetze selbsttätig aus.

Da die Batteriespannung abhängig ist von der Elektrolyttemperatur, der Belastung und dem Entladezustand, kann durch individuelle Batteriekühlung die Hauptnetzspannung der einzelnen Netze beeinflusst und so die Verteilung der Belastung durch die wie vorher beschrieben über Dioden angeschlossenen Verbraucher sowie die Verteilung der Einspeiseleistung aus über Dioden angeschlossenen Brennstoffzellenanlagen gesteuert werden. Gemäß einer Weiterbildung der Erfindung ist für mindestens alle minus eine, jedoch zweckmäßigerweise für alle Batterien eine Kühlvorrichtung vorgesehen sowie ein Regeleinrichtung, die die Kühlmittelzufuhr in Abhängigkeit von der Batteriespannung so steuert, dass eine möglichst gleiche Spannung erzielt wird, oder dass sich ein vom Bediener vorbestimmter Spannungsunterschied einstellt, wenn und solange dies beispielsweise zur Erzielung eines gleichen Entladezustandes der Batterien erforderlich ist.

Um sicherzustellen, dass im Falle eines Kurzschlusses in einem Versorgungsnetz die Brennstoffzellenanlage nicht in unzulässiger Weise belastet wird, ist die Brennstoffzellenanlage ausgangsseitig vorteilhaft mit einem Strombegrenzer versehen. Alternativ oder besser zusätzlich sollte die Brennstoffzellenanlage mit einer Schalteinrichtung versehen sein, welche die gesamte Brennstoffzellenanlage bei einem Spannungsabfall vorbestimmter Größe in einem Versorgungsnetz von diesem Versorgungsnetz trennt. Hierdurch wird sichergestellt, dass bei einem Kurzoder Fehlschluss in einem Versorgungsnetz die Brennstoffzellenanlage für das andere Versorgungsnetz bestimmungsgemäß weiter arbeiten kann und nicht vom Netz genommen zu werden braucht.

Wie eingangs erwähnt, ist es vorgesehen, die Versorgungsnetze im Bedarfsfall miteinander zu verbinden, damit Teile des einen Netzes vom anderen Versorgungsnetz mitversorgt werden können. Hierzu ist zweckmäßigerweise ein elektrischer Schalter vorgesehen, der im Normalbetrieb geöffnet ist.

Der körperliche Aufbau der Versorgungsnetze erfolgt, wie auf U-Booten üblich, durch Sammelschienen, an denen die Aggregate und Verbraucher angeschlossen werden. Bei einer Ausbildung mit zwei Versorgungsnetzen sind zweckmäßigerweise zwei Sammelschienen für jedes Versorgungsnetz vorgesehen, wobei zwei Sammelschienen gleichen Potentials beider Versorgungsnetze zu einer gemeinsamen Sammelschiene angeordnet sein können, die lediglich eine Trennvorrichtung aufweist, so dass diese Sammelschiene im Bedarfsfalle in zwei Teilschienen elektrisch getrennt werden kann. Sind mehr als zwei Versorgungsnetze vorgesehen, ist eine entsprechende Teilung der Sammelschiene in mehrere Teilschienen vorgesehen. Es sind dann auch eine entsprechende Anzahl von Trennvorrichtungen vorhanden. Der Vorteil dieser Anordnung ist der geringe Raumbedarf und der einfache Aufbau. Allerdings bedingt diese Anordnung, dass für den Anschluss der Bordnetzumformer an diese gemeinsame Sammelschiene Dioden oder vergleichbare Bauelemente vorgesehen sein müssen, die verhindern, dass nach Auftrennen der Sammelschiene in zwei Teilschienen ein Strom zwischen diesen Teilschienen fließt. Insoweit günstiger ist eine Anordnung, bei der die gemeinsame Sammelschiene in drei Teilschienen auftrennbar ist, wobei dann ein Schienenteil mit den Bordnetzumformern und die anderen Schienenteile jeweils mit einem Teilmotor, einer Batterie und einem Dieselgenerator verbunden sind. Auch die Brennstoffzellenanlage wird dann zweckmäßigerweise mit dem Schienenteil verbunden, an dem die Bordnetzumformer anschließen.

Zweckmäßigerweise sind Aggregate wie Akkumulatoren, Dieselgeneratoren, Umformer oder Teilmotoren über Schaltmittel aus der elektrischen Anlage des Bootes elektrisch ausgliederbar, um auf diese Weise sicherzustellen, dass bei Defekt eines dieser Aggregate dieses schnell und einfach abgeschaltet werden kann, ohne die Funktion des Versorgungsnetzes zu beeinträchtigen.

Die vorstehenden und nachfolgenden Beschreibungen beziehen sich im Wesentlichen auf ein Unterseeboot mit zwei Versorgungsnetzen. Es versteht sich, dass das der Erfindung zugrunde liegende Prinzip auch auf drei oder mehr Versorgungsnetze anwendbar ist, wobei dann die einzelnen Komponenten entsprechend den einzelnen Versorgungsnetzen zuzuordnen sind.

Die Erfindung ist nachfolgend anhand von in der Zeichnung dargestellten Ausführungsbeispielen näher erläutert. Es zeigen:
- Fig. 1: ein Schaltbild einer ersten Ausführungsvariante mit zwei Versorgungsnetzen, die eine gemeinsame zweiteilige Sammelschiene aufweisen,
- Fig. 2.: eine Ausführungsvariante, bei der die gemeinsame Sammelschiene dreiteilig ausgebildet ist,
- Fig. 3: die Eingliederung einer Brennstoffzellenanlage in die Versorgungsnetze und
- Fig. 4: eine alternative Ausführung zu Fig. 3.

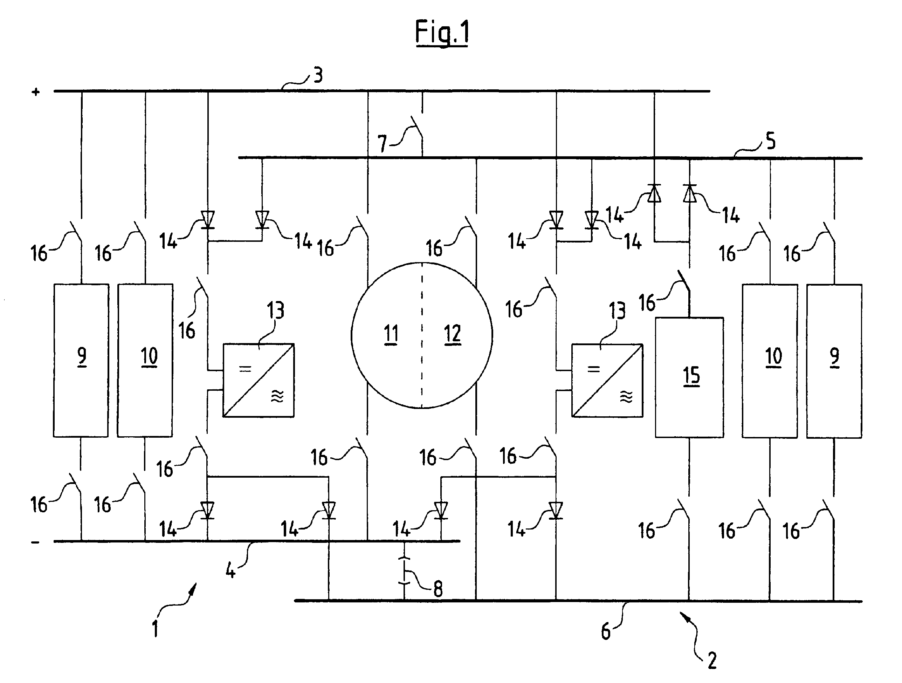

Das anhand von Fig. 1 schematisch dargestellte Versorgungssystem eines Unterseebootes besteht aus zwei Gleichstromversorgungsnetzen 1 und 2. Jedes dieser Versorgungsnetze 1 und 2 weist zwei Sammelschienen 3 und 4 bzw. 5 und 6 auf, wobei die Sammelschiene 3 das positive Potenzial und die Sammelschiene 4 das negative Potenzial des Versorgungsnetzes 1 hat und die Sammelschiene 5 das positive Potenzial und die Sammelschiene 6 das negative Potenzial des Versorgungsnetzes 2. Die Versorgungsnetze 1 und 2 sind im Normalbetrieb, d. h. wenn keine Störung auftritt, elektrisch voneinander getrennt, und zwar derart, dass zwar die Sammelschienen 4 und 6 miteinander verbunden, jedoch die Sammelschienen 3 und 5 durch einen im Normalbetrieb geöffneten Schalter 7 voneinander getrennt sind. Auf der Seite negativen Potenzials sind die Sammelschienen 4 und 6 elektrisch miteinander verbunden, jedoch ist dort eine Trennvorrichtung 8 vorgesehen, mit der es möglich ist, auch die Schienen 4 und 6 elektrisch voneinander zu trennen.

Jedes der Versorgungsnetze 1 und 2 weist einen Dieselgenerator 9, eine wiederaufladbare Batterie 10 sowie einen Teilmotor 11 bzw. 12 auf. Darüber hinaus ist jedem Versorgungsnetz 1, 2 ein Bordnetzumformer 13 zugeordnet.

Bei den Dieselgeneratoren 9 handelt es sich um Dieselmotoren, welche in an sich bekannter Weise einen Generator zur Stromerzeugung antreiben. Bei den Batterien 10 handelt es sich um Blei-Akkumulatoren, die jeweils die volle Versorgungsnetzspannung aufweisen. Alternativ können hier auch Nickelmetallhydrid- oder andere Akkumulatortypen eingesetzt werden. Bei dem Elektromotor 11, 12 handelt es sich um einen in zwei Teilmotore 11 und 12 elektrisch geteilten permanentmagneterregten Gleichstrommotor, welcher den Propeller des U-Bootes antreibt.

Die Bordnetzumformer 13 wandeln die in den Versorgungsnetzen 1, 2 zur Verfügung stehende Gleichspannung in eine Spannung um, die in Frequenz (z. B. Gleichspannung, 60 Hz-Wechselspannung, 400 Hz-Wechselspannung) und Spannungshöhe (z. B. 24 V, 115 V) der des jeweils angeschlossenen Bordnetzes entspricht, und speisen dieses. Die vorgenannten Aggregate 9, 10, 11, 12 und 13 sind jedem der Versorgungsnetze 1 und 2 zugeordnet, so dass bei Ausfall eines Versorgungsnetzes 2 das andere Versorgungsnetz 1, ohne jeglichen Schaltvorgang erhalten bleibt.

Die Bordnetzumformer 13 sind bei dieser Ausführungsvariante über Dioden 14 an beide Versorgungsnetze 1 und 2 angeschlossen. Die Dioden 14, welche zwischen einem Bordnetzumformer 13 und den Sammelschienen 3 und 5 bzw. zwischen einem Bordnetzumformer 13 und den Sammelschienen 4 und 6 angeordnet sind, stellen sicher, dass über die Bordnetzumformer kein Strom von einem Versorgungsnetz 1 in das zweite Versorgungsnetz 2 oder umgekehrt fließt, sondern ausschließlich in die Bordnetzumformer 13. Da diese an beide Versorgungsnetze 1 und 2 angeschlossen sind, werden sie zunächst stets von dem stärkeren Netz, d. h. dem Versorgungsnetz gespeist, welches die höhere Versorgungsspannung aufweist.

Des Weiteren ist eine in Fig. 1 nicht im Einzelnen dargestellte Regeleinrichtung vorgesehen, welche die Kühlmittelzufuhr zu den Batterien 10 in Abhängigkeit der Spannung der Batterien zum Erhalt einer möglichst gleichen Batteriespannung in beiden Versorgungsnetzen 1 und 2 regelt.

Eine Brennstoffzellenanlage 15 ist über Dioden 14 mit beiden Sammelschienen 3 und 5 der Versorgungsnetze 1 und 2 verbunden, zu der andren Seite besteht lediglich eine Verbindung zur Sammelschiene 6, die ihrerseits, soweit die Trennvorrichtung 8 nicht ausgelöst ist, mit der Sammelschiene 4 leitungsverbunden ist. Die Brennstoffzellenanlage 15 speist also ebenfalls in beide Versorgungsnetze 1 und 2, wobei hier in umgekehrter Weise wie bei den Bordnetzumformern 13 zunächst in das schwächere Netz, d. h. das Versorgungsnetz 1, 2 mit der geringeren Spannung eingespeist wird. Auch auf diese Weise erfolgt eine quasi selbsttätige Unterstützung des schwächeren Versorgungsnetzes.

Sämtliche Aggregate 9 - 13, 15 sind über Schalter 16 in die jeweiligen Versorgungsnetze 1 und 2 eingegliedert, so dass sie, beispielsweise bei einem Defekt, aus den Netzen elektrisch getrennt werden können, also auf Dauer nicht das gesamte Versorgungsnetz 1, 2, in dem sie angeschlossen sind, lahm legen.

Im Normalbetrieb arbeiten beide Versorgungsnetze 1 und 2 autark nebeneinander und unabhängig voneinander. Allerdings erfolgt die Belastung durch die an beiden Netzen angeschlossenen Umformer 13 sowie die Brennstoffzellenanlage 15 wie vorbeschrieben derart, dass das schwächere Versorgungsnetz gestützt wird. Darüber hinaus werden unterschiedliche Spannungen in den Versorgungsnetzen 1, 2 durch die vorbeschriebene Regeleinrichtung durch entsprechende Kühlmittelzufuhr zu den Batterien 10 weitgehend ausgeglichen.

Bei einem Störfall, typischerweise einen Kurz- oder Fehlschluss in einem Versorgungsnetz 1, 2 wird dieses zunächst abgeschaltet, indem zunächst die energiespeisenden Aggregate 9 und/oder 10 abgeschaltet werden. Der den Propeller treibende Motor 11, 12 bleibt dabei in Betrieb, da der Teilmotor, der von dem anderen, unbeeinträchtigten Versorgungsnetz gespeist wird, nach wie vor versorgt ist. In dieser Situation gibt der Propellermotor maximal die Leistung ab, die der Nennleistung des Teilmotors entspricht. Darüber hinaus bleiben auch die Bordnetze in Betrieb, da zum einen der Bordnetzumformer 13 des nicht beeinträchtigten Versorgungsnetzes normal läuft und zum anderen der Bordnetzumformer 13 des gestörten Versorgungsnetzes nunmehr aus dem anderen Versorgungsnetz gespeist wird. Über die Dioden 14 wird ein Rückfluss in das defekte Netz verhindert. Auch die Brennstoffzellenanlage 15 muss nicht heruntergefahren werden, da diese nun statt in beide Netze nur noch in eines der beiden Versorgungsnetze speist. Wenn der Fehler lokalisiert ist und nur dadurch beseitigt werden kann, dass das defekte Aggregat bzw. die Kurzschlussstelle schaltungstechnisch herausgetrennt wird, wird im Anschluss daran der Schalter 7 geschlossen, so dass die Versorgung des gestörten Versorgungsnetzes über das nicht gestörte Versorgungsnetz erfolgt. Um im Falle eines Fehlschlusses an einer der Sammelschienen 4 und 6 den entsprechenden Teil abtrennen zu können, ist die Trennvorrichtung 8 vorgesehen, die in einem solchen Fall zusätzlich zum Schalter 7 geöffnet wird.

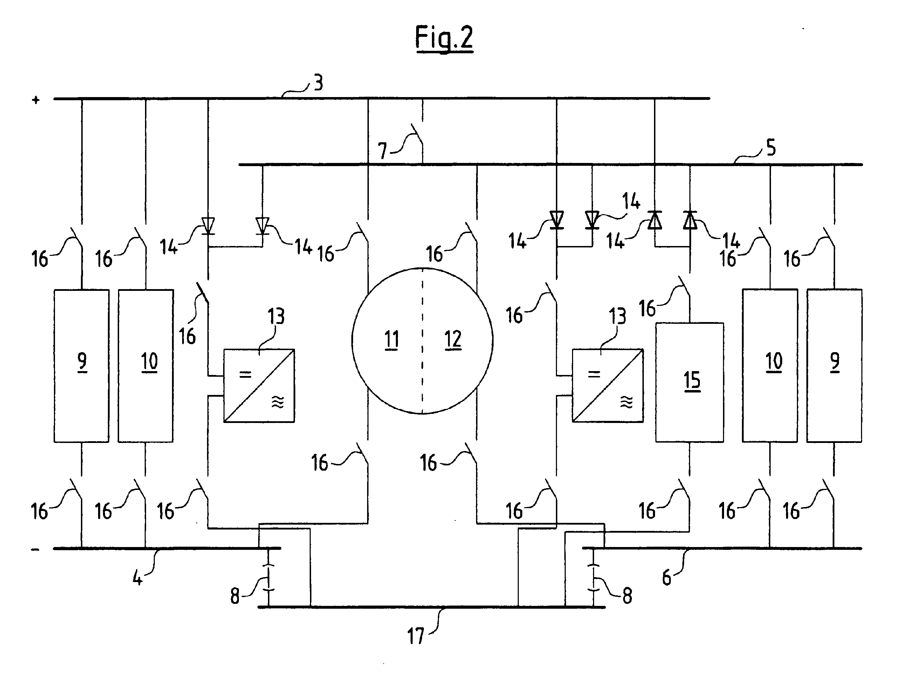

Die Ausführung gemäß Fig. 2 unterscheidet sich im Wesentlichen von der anhand von Fig. 1 vorbeschriebenen dadurch, dass die in Fig. 1 durch die Sammelschienen 4 und 6 gebildete gemeinsame Sammelschiene nicht aus zwei, sondern aus drei Teilschienen besteht. Bei der Schaltung nach Fig. 2 weist das Versorgungsnetz 1 eine Sammelschiene 3 positiven Potenzials und eine Sammelschiene 4 negativen Potenzials auf, das Versorgungsnetz 2 entsprechend einer Sammelschiene 5 positiven Potenzials sowie einer Sammelschiene 6 negativen Potenzials. Die Sammelschienen 4 und 6 sind jedoch nicht unmittelbar, sondern unter Zwischenschaltung einer Teilschiene 17 miteinander verbunden. Zwischen der Teilschiene 17 und den Sammelschienen 4 bzw. 6 ist jeweils eine Trennvorrichtung 8 vorgesehen. Der Anschluss der Aggregate 9, 10, 11, 12, 13 und 15 erfolgt in gleicher Weise zu den Sammelschienen 3 und 5 wie anhand von Fig. 1 beschrieben. Auch dort sind Dioden 14 vorgesehen, um einen Stromfluss zwischen den Sammelschienen 3 und 5 über die angeschlossenen Aggregate zu verhindern. Allerdings sind im Unterschied zu der Ausführung nach Fig. 1 die Bordnetzumformer 13 sowie die Brennstoffzellenanlage 15 nicht direkt an die Sammelschiene 4 bzw. 6 angeschlossen, sondern an die Teilschiene 17, und zwar unmittelbar, ohne Zwischenschaltung von Dioden 14. Über die Trennvorrichtung 8 kann je nachdem welches Versorgungsnetz gestört ist, eine Trennung zur Sammelschiene 4 bzw. zur Sammelschiene 6 hergestellt werden, wodurch sichergestellt werden kann, dass ein Stromfluss zu diesem defekten Versorgungsnetz ausgeschlossen werden kann. Der Vorteil dieser Anordnung gemäß Fig. 2 besteht darin, dass auf die Dioden zwischen den Bordnetzumformern 13 und den Sammelschienen 4 bzw. 6 verzichtet werden kann, insofern auch die hiermit verbundenen elektrischen Verluste vermieden werden können.

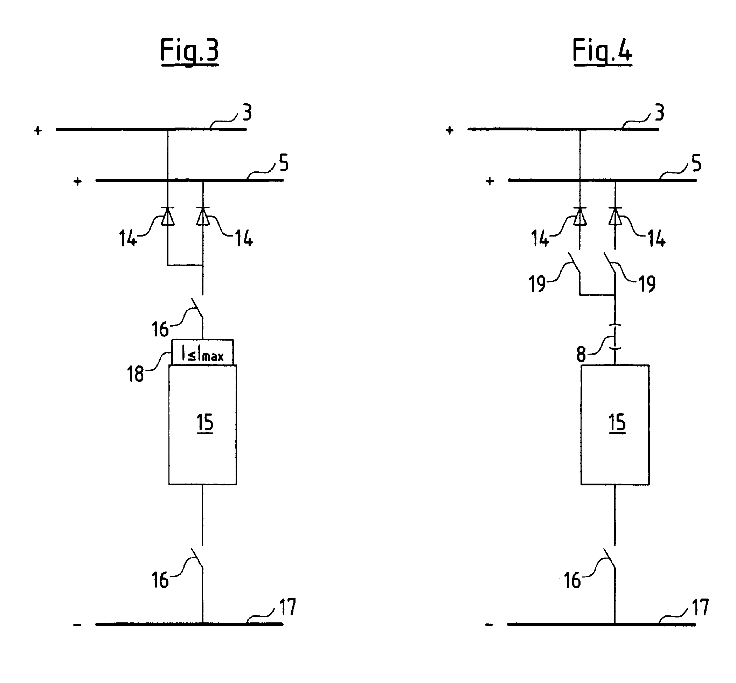

Um bei einem plötzlich auftretenden Störfall zu verhindern, dass die Brennstoffzellenanlage 15 mit einem zu hohen Strom belastet wird, ist, wie anhand von Fig. 3 dargestellt, dieser ein Strombegrenzer 18 nachgeordnet. Alternativ oder zusätzlich kann, wie anhand von Fig. 4 dargestellt ist, in jedem Strang zu den Sammelschienen 3 bzw. 5 ein Schalter 19 angeordnet sein, so dass die Verbindung zu dem defekten Versorgungsnetz 1 oder 2 getrennt werden kann, ohne dass die Versorgung des anderen Versorgungsnetzes darunter leidet. Schließlich kann vorsorglich noch eine Trennvorrichtung 8 vorgesehen sein, um die Brennstoffzellenanlage 15 z. B. zum Zwecke einer Reparatur sicher von beiden Versorgungsnetzen zu trennen.

### Bezugszeichenliste

- 1 -: Versorgungsnetz
- 2 -: Versorgungsnetz
- 3 -: Sammelschiene
- 4 -: Sammelschiene
- 5 -: Sammelschiene
- 6 -: Sammelschiene
- 7 -: Schalter
- 8 -: Trennvorrichtung
- 9 -: Dieselgenerator
- 10 -: Batterie
- 11 -: Teilmotor
- 12 -: Teilmotor
- 13 -: Bordnetzumformer
- 14 -: Dioden
- 15 -: Brennstoffzellenanlage
- 16 -: Schalter
- 17 -: Teilschiene
- 18 -: Strombegrenzer

## Patentansprüche

1. Unterseeboot, bei dem die elektrische Versorgung im Normalbetrieb über mindestens zwei voneinander getrennte elektrische Versorgungsnetze (1, 2) erfolgt, die bedarfsweise miteinander verbindbar sind, wobei jedem Versorgungsnetz (1, 2) mindestens ein elektronchemischer Energiespeicher (10) und mindestens ein Teil eines Antriebsmotor (11, 12) für einen Propeller zugeordnet sind und jedem Versorgungsnetz (1, 2) mindestens ein Bordnetzumformer (13) zugeordnet oder mindestens ein gemeinsamer Bordnetzumformer (13) vorgesehen ist, der über in eine Richtung sperrende elektronische Bauelemente (14) an beide Versorgungsnetze (1, 2) angeschlossen ist.

2. Unterseeboot nach Anspruch 1, **dadurch gekennzeichnet, dass** die Versorgungsnetze (1, 2) Gleichspannungsnetze sind, denen vorzugsweise jeweils zwei Sammelschienen (3, 4, 5, 6) zugeordnet sind.

3. Unterseeboot nach einem der vorhergehenden Ansprüche, **dadurch gekennzeichnet, dass** der Propeller von einem Elektromotor (11, 12) angetrieben ist, der elektrisch in mindestens zwei Teilmotoren (11, 12) aufgeteilt ist, wobei jeder Teilmotor (11, 12) einem anderen Versorgungsnetz (1, 2) zugeordnet ist.

4. Unterseeboot nach einem der vorhergehenden Ansprüche, **dadurch gekennzeichnet, dass** der Elektromotor (11, 12) ein Gleichstrommotor, vorzugsweise ein permanentmagneterregter Gleichstrommotor oder ein über Wechselrichter gespeister Wechselstrommotor ist.

5. Unterseeboot nach einem der vorhergehenden Ansprüche, **dadurch gekennzeichnet, dass** jedem Versorgungsnetz (1, 2) mindestens ein Dieselgenerator (9) und mindestens eine aufladbare Batterie (10) als Energiespeicher zugeordnet sind.

6. Unterseeboot nach einem der vorhergehenden Ansprüche, **dadurch gekennzeichnet, dass** eine Kühleinrichtung für mindestens eine, vorzugsweise alle aufladbaren Batterien (10) vorgesehen ist sowie eine Regeleinrichtung, welche die Kühlmittelzufuhr in Abhängigkeit der Batteriespannung zur Erzielung einer möglichst gleichen Spannung aller Batterien (10) und damit der Versorgungsnetze (1, 2) steuert, oder so steuert, dass ein von einem Bediener vorgegebener Spannungsunterschied zwischen den Versorgungsnetzen (1, 2) eingehalten wird.

7. Unterseeboot nach einem der vorhergehenden Ansprüche, **dadurch gekennzeichnet, dass** jeder Bordnetzumformer (13) über in eine Richtung sperrende elektronische Bauelemente (14), vorzugsweise Dioden, mit mindestens zwei Versorgungsnetzen (1, 2) elektrisch verbunden ist.

8. Unterseeboot nach einem der vorhergehenden Ansprüche, **dadurch gekennzeichnet, dass** mindestens eine Brennstoffzellenanlage (15) vorgesehen ist, die über in eine Richtung sperrende elektronische Bauelemente (14), vorzugsweise Dioden, in mindestens zwei Versorgungsnetze (1, 2) einspeist.

9. Unterseeboot nach einem der vorhergehenden Ansprüche, **dadurch gekennzeichnet, dass** der Brennstoffzellenanlage (15) Mittel zur ausgangsseitigen Strombegrenzung (18) zugeordnet sind.

10. Unterseeboot nach einem der vorhergehenden Ansprüche, **dadurch gekennzeichnet, dass** Mittel (19) vorgesehen sind, welche die Brennstoffzellenanlage bei einem Spannungsabfall vorbestimmter Größe in einem Versorgungsnetz (1, 2) von diesem Versorgungsnetz (1, 2) trennen.

11. Unterseeboot nach einem der vorhergehenden Ansprüche, **dadurch gekennzeichnet, dass** zwei Versorgungsnetze (1, 2) über einen Schalter (7) elektrisch miteinander verbindbar sind, wobei der Schalter (7) im Normalbetrieb geöffnet ist.

12. Unterseeboot nach einem der vorhergehenden Ansprüche, **dadurch gekennzeichnet, dass** zwei Versorgungsnetze (1, 2) in eine gemeinsame Sammelschiene (4, 6) speisen und dass Mittel (8) zum elektrischen Trennen dieser Sammelschiene (4, 6) in zwei Teilschienen (4, 6) vorgesehen sind.

13. Unterseeboot nach einem der vorhergehenden Ansprüche, **dadurch gekennzeichnet, dass** Mittel (8) vorgesehen sind, um die gemeinsame Sammelschiene (4, 6, 17) in drei Teilschienen (4, 6, 17) zu trennen, wobei ein Schienenteil (17) mit den Bordnetzumformern (13) und den Teilmotoren (11, 12) und die anderen Schienenteile (4, 6) jeweils mindestens mit einem Akkumulator (10) verbunden sind.

14. Unterseeboot nach einem der vorhergehenden Ansprüche, **dadurch gekennzeichnet, dass** Aggregate wie Akkumulator (10), Dieselgenerator (9), Umformer (13), und/oder Teilmotor (11, 12) über Schaltmittel (16) aus der elektrischen Anlage des Bootes elektrisch ausgliederbar sind.

## Claims

1. A submarine, with which the electrical supply in normal operation is effected via at least two electrical supply networks (1, 2) which are separated from one another and which may be connected to one another if required, wherein at least one electrochemical energy storage device (10) and at least one part of a drive motor (11, 12) for a propeller, are allocated to each supply network (1, 2), and at least one on-board network transformer (13) is allocated to each supply network (1, 2), or at least one common on-board network transformer (13) is provided, said-on-board network transformer, via electronic components (14) blocking in one direction, being connected to both supply networks (1, 2).

2. A submarine according to claim 1, **characterised in that** the supply networks (1, 2) are d.c. voltage networks, to which preferably in each case two bus bars (3, 4, 5, 6) are allocated.

3. A submarine according to one of the preceding claims, **characterised in that** the propeller is driven by an electric motor (11, 12) which is electrically divided into at least two part-motors (11, 12), wherein each part-motor (11, 12) is allocated to a different supply network (1,2).

4. A submarine according to one of the preceding claims, **characterised in that** the electric motor (11, 12) is a d.c. motor, preferably a d.c. motor excited by permanent magnet, or an a.c. motor fed via inverters.

5. A submarine according to one of the preceding claims, **characterised in that** at least one diesel generator (9) and at least one chargeable battery (10) as an energy storage device, are allocated to each supply network (1,2).

6. A submarine according to one of the preceding claims, **characterised in that** a cooling device for at least one, preferably all chargeable batteries (10) is provided, as well as a regulation device, which controls the supply of coolant in dependence on the battery voltage, for achieving an as uniform as possible voltage of all batteries (10) and thus of the supply networks (1, 2), or controls such that a voltage difference between the supply networks (1, 2) which is defined by the operator, is kept to.

7. A submarine according to one of the preceding claims, **characterised in that** each on-board network transformer (13) is electrically connected to at least two supply networks (1, 2) via electronic components (14) blocking in one direction, preferably diodes.

8. A submarine according to one of the preceding claims, **characterised in that** at least one fuel cell installation (15) is provided, which via electronic components (14) blocking in one direction, preferably diodes, feeds into at least two supply networks (1, 2).

9. A submarine according to one of the preceding claims **characterised in that** means for the current limitation (18) on the output side, are allocated to the fuel cell installation (15).

10. A submarine according to one of the preceding claims, **characterised in that** means (19) are provided, which separate the fuel cell installation from a supply network (1, 2), given a voltage drop of a defined magnitude in this supply network (1, 2).

11. A submarine according to one of the preceding claims, **characterised in that** two supply networks (1, 2) are electrically connectable to one another via a switch (7), wherein the switch (7) is opened in normal operation.

12. A submarine according to one of the preceding claims, **characterised in that** two supply networks (1, 2) feed into a common bus bar (4, 6), and that means (8) for the electrical separation of this bus bar (4, 6) into two bus bar segments (4, 6) are provided.

13. A submarine according to one of the preceding claims, **characterised in that** means (8) are provided, in order to separate the common bus bar (4, 6, 17) into three bus bar segments (4, 6, 17), wherein one bar part segment (17) is connected to the on-board network transformers (13) and the part-motors (11, 12), and the other bus bar segments (4, 6) in each case are at least connected to one accumulator (10).

14. A submarine according to one of the preceding claims, **characterised in that** assemblies such as accumulator (10), diesel generator (9), transformer (13) and/or part-motor (11, 12) may be electrically taken out of the electrical installation of the submarine via switch means (16).

## Revendications

1. Sous-marin, dans lequel l'alimentation électrique se fait, en marche normale, par l'intermédiaire d'au moins deux réseaux d'alimentation (1, 2) électriques, séparés l'un de l'autre, qui, en cas de besoin, peuvent être reliés l'un à l'autre, étant précisé qu'à chaque réseau d'alimentation (1, 2) sont associés au moins un accumulateur électrochimique d'énergie (10) et au moins une partie d'un moteur d'entraînement (11, 12) pour une hélice et qu'au moins un convertisseur de réseau de bord (13) est associé à chaque réseau d'alimentation (1, 2) ou bien il est prévu au moins un convertisseur de réseau de bord (13) commun, qui est raccordé aux deux réseaux d'alimentation (1, 2) par l'intermédiaire de composants électroniques (14) à effet bloquant dans un sens.

2. Sous-marin selon la revendication 1, **caractérisé en ce que** les réseaux d'alimentation (1, 2) sont des réseaux à tension continue, à chacun desquels sont, de préférence, associées deux barres de distribution (3, 4, 5, 6).

3. Sous-marin selon l'une des revendications précédentes, **caractérisé en ce que** l'hélice est entraînée par un moteur électrique (11, 12), qui est partagé électriquement en au moins deux moteurs partiels (11, 12), chaque moteur partiel (11, 12) étant associé à un réseau d'alimentation (1, 2) différent.

4. Sous-marin selon l'une des revendications précédentes, **caractérisé en ce que** le moteur électrique (11, 12) est un moteur à courant continu, de préférence un moteur à courant continu excité par aimant permanent, ou un moteur à courant alternatif alimenté au travers d'onduleurs.

5. Sous-marin selon l'une des revendications précédentes, **caractérisé en ce qu'**à chaque réseau d'alimentation (1, 2) sont associés au moins un groupe électrogène à moteur diesel (9) et, en tant qu'accumulateur d'énergie, au moins une batterie rechargeable (10).

6. Sous-marin selon l'une des revendications précédentes, **caractérisé en ce qu'**il est prévu un dispositif de refroidissement pour au moins une, de préférence toutes les batteries rechargeables (10), ainsi qu'un dispositif de régulation qui commande l'arrivée d'agent de refroidissement en fonction de la tension des batteries, pour l'obtention d'une tension la plus uniforme possible de toutes les batteries (10) et, par conséquent, des réseaux d'alimentation (1, 2), ou qui agit de telle façon qu'une différence de tension, pré-établie par un opérateur, soit respectée entre les réseaux d'alimentation (1, 2).

7. Sous-marin selon l'une des revendications précédentes, **caractérisé en ce que** chaque convertisseur de réseau de bord (13) est relié électriquement, par l'intermédiaire de composants électroniques (14) à effet bloquant dans un sens, de préférence de diodes, à au moins deux réseaux d'alimentation (1, 2).

8. Sous-marin selon l'une des revendications précédentes, **caractérisé en ce qu'**il est prévu au moins une installation de pile à combustible (15), qui approvisionne au moins deux réseaux d'alimentation (1, 2), au travers de composants électroniques (14) à effet bloquant dans un sens, de préférence de diodes.

9. Sous-marin selon l'une des revendications précédentes, **caractérisé en ce qu'**à l'installation de pile à combustible (15) sont associés des moyens pour assurer une limitation de courant (18) du côté de la sortie.

10. Sous-marin selon l'une des revendications précédentes, **caractérisé en ce que** sont prévus des moyens (19) qui, dans le cas d'une chute de tension d'amplitude prédéterminée dans un réseau d'alimentation (1, 2), déconnectent l'installation de pile à combustible de ce réseau d'alimentation (1,2).

11. Sous-marin selon l'une des revendications précédentes, **caractérisé en ce que** deux réseaux d'alimentation (1, 2) peuvent être reliés électriquement l'un à l'autre par l'intermédiaire d'un interrupteur (7), l'interrupteur (7) étant ouvert en marche normale.

12. Sous-marin selon l'une des revendications précédentes, **caractérisé en ce que** deux réseaux d'alimentation (1, 2) alimentent une barre de distribution commune (4, 6) et **en ce que** des moyens (8) pour sectionner électriquement cette barre de distribution (4, 6) en deux barres partielles (4, 6), sont prévus.

13. Sous-marin selon l'une des revendications précédentes, **caractérisé en ce que** des moyens (8) sont prévus pour sectionner la barre de distribution commune (4, 6, 17) en trois barres partielles (4, 6, 17), une partie de barre (17) étant alors reliée au convertisseur de réseau de bord (13) et aux moteurs partiels (11, 12) et chacune des autres parties de barre (4, 6), au moins à un accumulateur (10).

14. Sous-marin selon l'une des revendications précédentes, **caractérisé en ce que** des sous-ensembles, tels qu'un accumulateur (10), un groupe électrogène à moteur diesel (9), un convertisseur (13) et/ou un moteur partiel (11, 12), peuvent être électriquement isolés, par des moyens formant interrupteurs (16), de l'installation électrique du navire.
